# EUROPÄISCHE PATENTSCHRIFT

(11) **EP 1 216 735 B1**
(45) Veröffentlichungstag und Bekanntmachung des Hinweises auf die Patenterteilung: **28.03.2007**
(21) Anmeldenummer: 01129470.9
(22) Anmeldetag: 11.12.2001
(51) Int. Cl.: B01D 17/02, C02F 1/28

(54) **Entfernung von Öl aus Abwasser**
Removal of oil from waste water
Elimination de l'huile dans de l'eau usée

(30) Priorität: 20.12.2000 DE 10063426
(43) Veröffentlichungstag der Anmeldung: 26.06.2002
(73) Patentinhaber: ECOLAB INC., St. Paul, MN 55102-1390 (US)
(72) Erfinder: Kresse, Franz, 40723 Hilden (DE); Merz, Thomas, Dr., 40723 Hilden (DE)
(74) Vertreter: polypatent

(56) Entgegenhaltungen:
- US-A- 4 202 766
- US-A- 5 360 579
- DATABASE WPI Section Ch,13 Derwent Publications Ltd., London, GB; Class D15, AN 1986-085771 XP002241970 & JP 61 033287 A (KANAGAWA-KEN)

## Beschreibung

Abwässer aus Gewerbebetrieben enthalten oft größere Mengen an Mineralölen und dürfen deshalb nicht direkt an Kläranlagen abgegeben werden, da deren Betreiber in der Regel sehr niedrige Höchstwerte für Kohlenwasserstoffe von größenordnungsgemäß 20 mg/l und 100 mg/l für schwerflüchtige lipophile Stoffe vorschreiben. Die Einhaltung dieser Grenzwerte erfordert deshalb eine Vorbehandlung der Abwässer, beispielsweise mit Hilfe von Ölabscheidern. Besondere Schwierigkeiten bereiten Mineralöle in emulgierter Form, wie sie z.B. als Bohr- oder Schneidöle, als Textilhilfsmittel oder auch als Ablaugen von Wäschereien oder anderen Reinigungsbetrieben anfallen. Eine Entfernung des Öls allein mit mechanischen Mitteln ist hier im allgemeinen nicht möglich; vielmehr müssen zunächst die Emulsionen durch Zusatz von sogenannten Demulgatoren gebrochen werden. Neben erhöhtem Arbeitsaufwand bedeutet dies eine zusätzliche Verunreinigung durch den Demulgator, die ihrerseits die Weiterverwendbarkeit des Wassers als auch des zurückgewonnenen Öls beeinträchtigen kann. Besondere Schwierigkeiten bereiten Abwässer, in denen das Öl überwiegend durch nichtionische Emulgatoren emulgiert wird, da für diese Form praktisch keine geeigneten Demulgatoren bekannt sind.

Die DE-A-27 03 210 beschreibt eine Vorrichtung zum Entfernen von auf der Oberfläche einer Flüssigkeit, vorzugsweise Wasser, schwimmenden flüssigen Kohlenwasserstoffen, insbesondere Öl oder Benzin, mittels mindestens einer um Walzen umlaufenden, angetriebenen endlosen Bahn, deren ab- und adsorbierender Bereich zumindest im wesentlichen aus Fasern und/oder Fäden mit oleophilen und hydrophoben Eigenschaften besteht, wobei vorzugsweise die Fasern und/oder Fäden der Bahn zumindest im wesentlichen in Wirrlage liegen und besonders bevorzugt ein Vlies darstellen.

Bei den Fasern und Fäden für solche Bahnen handelt es sich vorzugsweise um Fasern und Fäden aus Kunststoff, besonders zweckmäßig aus Polypropylen. Doch kommen auch andere Stoffe für die Fasern und Fäden in Frage.

Wie auf Seite 9 der DE-A-27 03 210 offenbart, dient die beschriebene Vorrichtung vorzugsweise dem Abscheiden von insbesondere fließfähigen Kohlenwasserstoffen, wie Öl, Benzin oder dergleichen, welche auf der Oberfläche einer Flüssigkeit, vorzugsweise auf dem Wasser eines Gewässers oder dergleichen, jedoch gegebenenfalls auch auf einer anderen Flüssigkeit, wie Werkzeugmaschinenkühlflüssigkeit oder dergleichen schwimmt. Derartige Flüssigkeiten enthalten in der Regel auch Öl in emulgierter Form.

Aufgrund dieses Sachverhalts könnte der Fachmann gegebenenfalls angeregt werden, die Abtrennung von Öl aus Abwässern oder dergleichen in Angriff zu nehmen, auch wenn das Öl in sehr stabil emulgierter Form vorliegt. Allerdings stellt sich bei dem Versuch, die DE-A-27 03 210 in der Praxis für diesen Zweck umzusetzen, heraus, daß der Abtrennungsgrad von emulgiertem Öl, insbesondere bei verunreinigten Waschflotten, nicht ausreicht, um das Verfahren bei einer breiten Zahl von Anwendern einzuführen. Es wurde festgestellt, daß emulgiert vorliegendes Öl nicht in ausreichendem Umfang innerhalb eines wirtschaftlich überschaubaren Zeitrahmens aus dem Abwasser entfernt werden konnte. Da auch während der darauffolgenden Jahre dieses Problem nicht zur Zufriedenheit der Anwender gelöst werden konnte und nach wie vor ein Bedarf nach einem funktionierenden Verfahren bestand, wurde weiterhin an dem Problem gearbeitet. Eine befriedigende Lösung für das vorliegende Problem konnte jedoch bisher nicht erreicht werden. Das Interesse der Anmelderin lag insbesondere auf dem Gebiet von Reinigungsverfahren, und ganz besonders der Behandlung von Waschflotten, in denen emulgiertes Öl aufgrund des Waschens von ölverschmutzten Gegenständen vorliegt.

Das US-A-4202766 beschreibt ein Verfahren zur Abtrennung von Öl aus Abwasser, bei dem einer Tensid/Öl Emulsion festes Ca-hydroxid oder Ca-Oxid zugegeben wird, und nach der Adsorption des Öls an das feste Adsorbens HCl zugegeben wird, um den pH-Wert einzustellen und das Adsorbens zu lösen.

Aufgabe der vorliegenden Anmeldung war es demzufolge, ein Verfahren zur Reinigung ölverschmutzter Gegenstände zu entwickeln, das es ermöglicht, einen großen Teil des in der Waschflotte emulgierten Öls durch einfache wirtschaftlich vertretbare Maßnahmen abzutrennen.

Gegenstand der vorliegendenErfindung ist ein Verfahren zur Reinigung von ölverschmutzten Waschgütern in einer gewerblichen Reinigungsmaschine, wobei zumindest ein Teil der Waschflotte, die mit anionischen Tensiden emulgiertes Öl enthält, in einem separaten Auffangbehälter gesammelt wird, wobei die gesammelte Waschflotte mit einer wasserlöslichen Verbindung, ausgewählt aus Calcium-Salzen und quartären Ammoniumverbindungen versetzt wird und danach die so behandelte Waschflotte mit einem hydrophoben Kunststoff mit großer Oberfläche für die Adsorption von Öl in Berührung gebracht und weitgehend vom Öl befreit wird.

Für eine möglichst effektive Durchführung des Verfahrens ist es zweckmäßig, daß eine große Oberfläche für die Adsorption des Öls zur Verfügung steht. Gut geeignet sind Formen, in denen der Kunststoff eine spezifische Oberfläche von wenigstens 0,01 m²/g, vorzugsweise wenigstens 0,05 m²/g aufweist. Vorzugsweise wird der Kunststoff in Form von Gewebe oder Gewirke oder als Vliesstoff eingesetzt. Weniger gut geeignet sind Kunststofformen mit feinen Poren, wenn sich hier das Öl so fest einlagern kann, daß es nahezu irreversibel gebunden wird, und damit die Wiederverwendung des Kunststoffes erschwert oder unmöglich wird.

Für das erfindungsgemäße Verfahren ist es nicht nötig, den Kunststoff in reiner Form einzusetzen. Vielmehr ist es durchaus möglich, daß der Kunststoff oberflächlich auf einen Träger, beispielsweise Cellulose, aufgebracht ist, oder im Gemisch mit anderen festen Stoffen, beispielsweise in Form eines Mischgewebes oder in Form eines Pulvergemisches mit anderen Adsorbentien, angewandt wird.

Der Gehalt an Kunststoffen in derartigen Kombinationen liegt im allgemeinen über 30 Gew.-%, vorzugsweise über 70 Gew.-%.

Die für das erfindungsgemäße Verfahren geeigneten hydrophoben Kunststoffe weisen eine hohe Adsorptionsfähigkeit für Mineralöl auf. Vorzugsweise werden Kunststoffe verwendet, die aus wäßrigen Flotten wenigstens 100 % ihres Eigengewichts, insbesondere mehr als 200 %, an Mineralöl aufnehmen können. Beispiele geeigneter Kunststoffe sind feste Polysiloxane und insbesondere Polyolefine. Von den Polyolefinen wiederum werden Polyethylen und vor allem Polypropylen besonders bevorzugt. Prinzipiell sind auch hydrophobe Kunststoffe aus den Klassen Polyamide, Polyester und Polyurethane, sowie Mischpolymerisate, die überwiegend aus Olefinmonomeren hergestellt werden, geeignet.

Vorzugsweise sind in den im Rahmen des erfindungsgemäßen Verfahrens zugesetzten tensidhaltigen Mitteln anionische Tenside ausgewählt aus C₈-C₁₈-Alkylsulfaten, C₈-C₁₈-Alkylethersulfaten, C₈-C₁₈-Alkansulfonaten, C₈-C₁₈-α-Olefinsulfonaten, sulfonierten C₈-C₁₈-Fettsäuren, C₈-C₁₈-Alkylbenzolsulfonaten, Sulfonbernsteinsäuremono- und -di-C₁-C₁₂-Alkylestern, C₈-C₁₈-Alkylpolyglykolethercarboxylaten, C₈-C₁₈-N-Acyltauriden, C₈-C₁₈-N-Sarkosinaten, C₈-C₁₈-Alkylisethionaten sowie deren Gemischen enthalten. Dabei ist es besonders bevorzugt, wenn die in einem separaten Auffangbehälter gesammelte mit Öl kontaminierte Waschflotte, bezogen auf die gesamte Waschflotte 0,01 bis 5 Gew.-% und ganz besonders bevorzugt 0,1 bis 2 Gew.-% anionische Tenside enthält.

Es ist für das erfindungsgemäße Verfahren ebenfalls bevorzugt, daß in der genannten Waschflotte der Anteil anionischer Tenside, bezogen auf den gesamten Tensid-Gehalt, mehr als 95 Gew.-%, besonders bevorzugt mehr als 99 Gew.-% und ganz besonders bevorzugt 100 Gew.-% beträgt.

In einer ebenfalls bevorzugten Ausführungsform des erfindungsgemäßen Verfahrens ist das der im separaten Auffangbehälter gesammelten Waschflotte zugesetzte wasserlösliche Calziumsalz ausgewählt aus Calziumchlorid, Calziumacetat und Calziumnitrat, wobei es besonders bevorzugt ist, wenn das genannte Calziumsalz in einer Menge zugesetzt wird, die der 0,5- bis 2-fachen Menge der in der Waschflotte enthaltenen anionischen Tenside val-äquivalent ist.

Es ist außerdem bevorzugt, daß die in dem separaten Auffangbehälter gesammelte Waschflotte gerührt wird.

Für den Fall der Zugabe von quartären Ammoniumverbindungen sind Benzalkon und/oder übliche Alkyldimethylammoniumchloride mit 8 bis 18 C-Atomen in der Alkylkette bevorzugt.

Die Durchführung des Verfahrens kann sowohl diskontinuierlich als auch in Teilen oder vollständig kontinuierlich durchgeführt werden. So kann beispielsweise das in einem Sammelbehälter befindliche Abwasser nach Zugabe der erforderlichen Mengen an Calcium-Verbindung mit einem Kunststoff-Gewirke, beispielsweise auf Propylenbasis, in Kontakt gebracht und nach ausreichender Kontaktzeit, vorzugsweise unter Rühren, von dem mit Öl beladenen Kunststoff getrennt werden.

Das Verfahren kann sowohl an kalten als auch an warmen Abwässern, d. h. im gesamten Temperaturbereich von 0 °C bis 100 °C und darüber hinaus (etwa bei salzhaltigen Abwässern) durchgeführt werden. Besonders bevorzugt ist ein Temperaturbereich von 20 bis 80 °C. Dabei sind tiefere Temperaturen für die Aufnahme des Öls durch den Kunststoff günstiger. Je nach gewünschtem Entölungsgrad können die Kontaktzeiten in weiten Grenzen beispielsweise von wenigen Sekunden bis hin zu einer Stunde und mehr gewählt werden. Sie liegen vorzugsweise zwischen etwa 10 Sekunden und 30 Minuten.

Vorzugsweise wird das Öl nach Beendigung des Verfahrens wieder so weit wie möglich vom Kunststoff entfernt. Die Trennung des Öls vom Kunststoff zur Wiederverwendung des Kunststoffs kann auf beliebige Weise erfolgen. So kann das Öl beispielsweise mit Wasserdampf aus dem Kunststoff ausgetrieben werden oder mit geeigneten organischen Lösungsmitteln abgelöst werden. Sehr viel einfacher und kostengünstiger ist die Möglichkeit, das Öl auf mechanischem Wege, beispielsweise durch Abpressen, Abschleudem oder durch Abblasen mit einem kräftigen Preßluftstrahl, so weitgehend abzutrennen, daß der Kunststoff erneut zur Abwasserreinigung eingesetzt werden kann.

Je nach Bedingungen kann es im Rahmen des erfindungsgemäßen Verfahrens auch bevorzugt sein, daß nach Beendigung des Verfahrens der mit Öl belastete hydrophobe Kunststoff durch Verbrennen entsorgt wird. Durch geeignete Wahl des Kunststoffs, der Kunststoffmenge und der Kontaktzeiten läßt sich das Verfahren weitgehend der Abwasserbelastung anpassen, so daß stets eine wesentliche Reduzierung des Mineralölgehalts erreicht wird und in vielen Fällen das Abwasser nach der Behandlung direkt einer Kläranlage zugeführt werden kann. Besonders hoch ist der relative Grad der Ölentfernung dann, wenn stark ölhaltige Abwässer dem Reinigungsverfahren unterworfen werden. Es empfiehlt sich deshalb, bei der Zusammenführung ölfreier oder ölarmer Abwässer mit stark ölbeladenen Abwässern die letzteren vor der Zusammenführung zu reinigen, um das bestmögliche Ergebnis zu erhalten. Durch diesen Prozeß wird Kohlenwasserstoffwert und somit der CSB-Wert deutlich reduziert.

Ein weiterer Vorteil besteht darin, daß eventuell im Waschmittel/Waschalkali enthaltenes Tripolyphosphat durch die Calziumsalz-Zugabe ausgefällt wird und ebenfalls auf dem Gewirke absorbiert. Dadurch wird die Einhaltung der P-Grenzwerte im Abwasser ermöglicht.

Je nach Situation kann auch die als Abwasser bezeichnete Lösung nach weitgehender Entfernung von Öl wieder dem Waschverfahren zugeführt oder anderweitig verwertet werden.

Ein weiterer Gegenstand der vorliegenden Erfindung ist ein System zum ökologisch bewußten Waschen von mit Öl verschmutzten Waschgütern, enthaltend
a) ein oder mehrere tensidhaltige Mittel, die, bezogen auf den gesamten Tensid-Gehalt, mehr als 95 Gew.-%, vorzugsweise mehr als 99 Gew.-% und besonders bevorzugt 100 Gew.-% anionische Tenside enthalten, sowie
b) ein Mittel auf Basis von wasserlöslichen Calzium-Salzen, vorzugsweise ausgewählt aus Calziumchlorid, Calziumacetat und Calziumnitrat, sowie
c) einen hydrophoben Kunststoff, vorzugsweise ausgewählt aus Polyolefin, Polysiloxan und Polypropylen mit hohen Oberfläche, der ein hohes Aufnahmevermögen für Öl aufweist und vorzugsweise in Form eines Gewebes, Gewirkes oder als Vliesstoff eingesetzt wird.

### Beispiele

Als Test-Textil wurden 3 Gewebestreifen (Polyester : Baumwolle = 50 : 50) mit einer Fläche von 12 x 12 cm verwendet. Diese Textil-Teile wurden mit insgesamt 3 g Motoröl [15 W-40] gleichmäßig getränkt. Danach wurden diese Gewebestreifen in ein 1 L-Becherglas eingehängt und mit 800 ml wäßriger Tensidlösung über 10 Minuten unter Rühren behandelt. Der Versuch wurde bei 60 °C durchgeführt. Als Tensid lag in der Lösung ein Anteil von ca. 0,7 Gew.-% an Alkansulfonat vor. Bei dieser Behandlung wurden 2,2 g Öl von den Gewebestreifen abgelöst.

Die so vorliegende emulgierte Lösung wurde mit 9 g Calziumchlorid x 2H₂O versetzt, mit der Folge, daß die Emulsion gebrochen wurde und separierte Bestandteile obenauf schwammen. Nach Abkühlen der Lösung auf 20 °C wurde in die Lösung ein PP-Gewirke mit einer Fläche von 19 x 6 cm² eingehängt. Es ließ sich bei dem Versuch feststellen, daß das gesamte Öl, also 2,2 g sowie etwa 4,7 g des Reaktions-Produktes des Alkansulfonats mit der Ca-Verbindung, durch das Polypropylengewirke aufgenommen wurde. Das Polypropylengewirke wurde nach der Versuchsdurchführung aus der Lösung entfernt. Nach dem Absorptionsvorgang war die Lösung absolut klar. Anschließend wurde das Absorptionsgut zwischen 2 Walzen abgequetscht. Bei der erneuten Wiederverwendung zeigte das Polypropylen-Gewirke etwa 70 % der Aufnahmefähigkeit eines ungebrauchten Polypropylen-Gewirkes.

## Patentansprüche

1. Verfahren zur Reinigung von ölverschmutzten Waschgütern in einer gewerblichen Reinigungsmaschine, wobei zumindest ein Teil der Waschflotte, die mit anionischen Tensiden emulgiertes Öl enthält, in einem separaten Auffangbehälter gesammelt wird, wobei die gesammelte Waschflotte mit einer wasserlöslichen Verbindung, ausgewählt aus Calcium-Salzen und quartären Ammoniumverbindungen versetzt wird und danach die so behandelte Waschflotte mit einem hydrophoben Kunststoff mit großer Oberfläche für die Adsorption von Öl in Berührung gebracht und weitgehend vom Öl befreit wird.

2. Verfahren nach Anspruch 1, **dadurch gekennzeichnet, daß** der hydrophobe Kunststoff in Form eines Gewebes, Gewirkes oder als Vliesstoff eingesetzt wird.

3. Verfahren nach einem der Ansprüche 1 oder 2, **dadurch gekennzeichnet, daß** der hydrophobe Kunststoff ausgewählt ist aus Polysiloxanen und Polyolefinen, insbesondere Polypropylen.

4. Verfahren nach einem oder mehreren der Ansprüche 1 bis 3, **dadurch gekennzeichnet, daß** die im Rahmen des Verfahrens zugesetzten tensidhaltigen Mittel anionische Tenside ausgewählt aus C₈-C₁₈-Alkylsulfaten, C₈-C₁₈-Alkylethersulfaten, C₈-C₁₈-Alkansulfonaten, C₈-C₁₈-α-Olefinsulfonaten, sulfonierten C₈-C₁₈-Fettsäuren, C₈-C₁₈-Alkylbenzolsulfonaten, Sulfonbernsteinsäure und -di-C₁-C₁₂-Alkylesterm, C₈-C₁₈-Alkylpolyglykolethercarboxylaten, C₈-C₁₈-N-Acyltauriden, C₈-C₁₈-N-Sarkosinaten, C₈-C₁₈-Alkylisethionaten sowie deren Gemische enthalten.

5. Verfahren nach einem oder mehreren der Ansprüche 1 bis 4, **dadurch gekennzeichnet, daß** die in einem separaten Auffangbehälter gesammelte Waschflotte bezogen auf die gesamte Waschflotte 0,01 bis 5 Gew.-% anionische Tenside enthält.

6. Verfahren nach einem oder mehreren der Ansprüche 1 bis 5, **dadurch gekennzeichnet, daß** bezogen auf den gesamten Tensid-Gehalt in der Waschflotte der Anteil anionischer Tenside mehr als 95 Gew.-% ausmacht.

7. Verfahren nach einem oder mehreren der Ansprüche 1 bis 6, **dadurch gekennzeichnet, daß** das der im separaten Auffangbehälter gesammelten Waschflotte zugesetzte wasserlösliche Calcium-Salz ausgewählt wird aus Calciumchlorid, Calciumacetat und Calciumnitrat.

8. Verfahren nach einem oder mehreren der Ansprüche 1 bis 7, **dadurch gekennzeichnet, daß** der in einem separaten Auffangbehälter gesammelten Waschflotte so viel wasserlösliches Calcium-Salz zugesetzt wird, wie der 0,5- bis 2-fachen Menge an enthaltenem anionischen Tensid val-äquivalent ist.

9. Verfahren nach einem oder mehreren der Ansprüche 1 bis 8, **dadurch gekennzeichnet, daß** die in dem separaten Auffangbehälter gesammelte Waschflotte gerührt wird.

10. Verfahren nach einem oder mehreren der Ansprüche 1 bis 9, **dadurch gekennzeichnet, daß** die Temperatur der in dem separaten Auffangbehälter gesammelten Waschflotte zwischen 20 und 80°C beträgt.

11. Verfahren nach einem oder mehreren der Ansprüche 1 bis 10, **dadurch gekennzeichnet, daß** nach Beendigung des Verfahrens der mit Öl belastete hydrophobe Kunststoff durch Verbrennen entsorgt wird.

12. Verfahren nach einem oder mehreren der Ansprüche 1 bis 10, **dadurch gekennzeichnet, daß** nach Beendigung des Verfahrens der mit Öl belastete hydrophobe Kunststoff durch Entfernen des Öls für die Wiederverwendung vorbereitet wird.

13. System zum Waschen von mit Öl verschmutzten Waschgütern, enthaltend
a) ein oder mehrere tensidhaltige Mittel, in denen bezogen auf den gesamten Tensid-Gehalt der Anteil anionischer Tenside mehr als 95 Gew.-% beträgt
b) ein Mittel auf Basis von wasserlöslichen Calcium-Salzen, vorzugsweise ausgewählt aus Calciumchlorid, Calciumacetat und Calciumnitrat sowie
c) einen hydrophoben Kunststoff, vorzugsweise ausgewählt aus Polyolefin, Polysiloxan und Polypropylen mit hoher Oberfläche, der ein hohes Aufnahmevermögen für Öl aufweist und vorzugsweise in Form eines Gewebes, Gewirkes oder als Vliesstoff eingesetzt wird.

## Claims

1. A method of cleaning oil-soiled articles for washing in a commercial cleaner, wherein at least part of the wash liquor containing oil emulsified with anionic surfactants is collected in a separate collecting tank, and wherein the collected wash liquor is added with a water-soluble compound selected from calcium salts and quaternary ammonium compounds and the wash liquor thus treated is subsequently contacted with a hydrophobic plastic material of large surface area for the adsorption of oil and largely made free of oil.

2. The method according to claim 1, **characterized in that** the hydrophobic plastic material is employed in the form of a fabric, knitted fabric or nonwoven.

3. The method according to any of claims 1 or 2, **characterized in that** the hydrophobic plastic material is selected from polysiloxanes and polyolefins, particularly polypropylene.

4. The method according to one or more of claims 1 to 3, **characterized in that** the surfactant-containing agents added within the bounds of this method include anionic surfactants selected from C₈-C₁₈ alkyl sulfates, C₈-C₁₈ alkyl ether sulfates, C₈-C₁₈ alkanesulfonates, C₈-C₁₈ α-olefinsulfonates, sulfonated C₈-C₁₈ fatty acids, C₈-C₁₈ alkylbenzenesulfonates, sulfosuccinic acid and di(C₁-C₂ alkyl) esters, C₈-C₁₈ alkylpolyglycol ether carboxylates, C₈-C₁₈ N-acyltaurides, C₈-C₁₈ N-sarcosinates, C₈-C₁₈ alkyl isethionates, as well as mixtures thereof.

5. The method according to one or more of claims 1 to 4, **characterized in that** the wash liquor collected in the separate collecting tank includes 0.01 to 5 wt.-% of anionic surfactants based on the overall wash liquor.

6. The method according to one or more of claims 1 to 5, **characterized in that** the proportion of anionic surfactans is more than 95 wt.-% based on the overall surfactant content in the wash liquor.

7. The method according to one or more of claims 1 to 6, **characterized in that** the water-soluble calcium salt added to the wash liquor collected in the separate collecting tank is selected from calcium chloride, calcium acetate and calcium nitrate.

8. The method according to one or more of claims 1 to 7, **characterized in that** the wash liquor collected in the separate collecting tank is added with water-soluble calcium salt in an amount that is val-equivalent to 0.5 to 2 times the amount of anionic surfactant included.

9. The method according to one or more of claims 1 to 8, **characterized in that** the wash liquor collected in the separate collecting tank is stirred.

10. The method according to one or more of claims 1 to 9, **characterized in that** the temperature of the wash liquor collected in the separate collecting tank is between 20 and 80°C.

11. The method according to one or more of claims 1 to 10, **characterized in that** following completion of the process, the oil-polluted hydrophobic plastic material is disposed of by combustion.

12. The method according to one or more of claims 1 to 10, **characterized in that** following completion of the process, the oil-polluted hydrophobic plastic material is prepared to be reused.

13. A system for washing oil-soiled articles to be washed, said system including
a) one or more surfactant-containing agents in which the proportion of anionic surfactans is more than 95 wt.-% based on the overall surfactant content;
b) an agent based on water-soluble calcium salts preferably selected from calcium chloride, calcium acetate and calcium nitrate; and
c) a hydrophobic plastic material preferably selected from polyolefin, polysiloxane and polypropylene with a large surface area, which material has a high absorptive capacity for oil and is preferably employed in the form of a fabric, knitted fabric or nonwoven.

## Revendications

1. Procédé de nettoyage de produits à laver pollués par de l'huile dans une machine à laver professionnelle, selon lequel au moins une partie du bain de lavage, qui contient de l'huile émulsifiée avec des tensioactifs anioniques, est collectée dans un collecteur séparé, le bain de lavage collecté est mélangé à un composé hydrosoluble choisi parmi des sels de calcium et des composés d'ammonium quaternaire et ensuite, le bain de lavage ainsi traité est mis en contact avec une matière plastique hydrophobe disposant d'une grande surface pour l'adsorption d'huile, et le bain est largement débarrassé de l'huile.

2. Procédé selon la revendication 1,
**caractérisé en ce que**
la matière plastique hydrophobe utilisée a la forme d'un tissu, d'un tissu à mailles ou d'un non-tissé.

3. Procédé selon l'une quelconque des revendications 1 ou 2,
**caractérisé en ce que**
la matière plastique hydrophobe est choisie parmi les polysiloxanes et les polyoléfines, en particulier le polypropylène.

4. Procédé selon l'une quelconque ou plusieurs des revendications 1 à 3,
**caractérisé en ce que**
les produits tensioactifs ajoutés dans le cadre du procédé sont des tensioactifs anioniques choisis parmi les sulfates d'alkyle en C₈ à C₁₈, les éthersulfates d'alkyle en C₈ à C₁₈, les sulfonates d'alcane en C₈ à C₁₈, les sulfonates d'α-oléfine en C₈ à C₁₈, les acides gras en C₈ à C₁₈ sulfonés, les sulfonates d'alkylbenzène en C₈ à C₁₈, l'acide sulfone succinique et les esters de dialkyle en C₁ C₁₂, les éthercarboxylates d'alkyle polyglycol en C₈ à C₁₈, les N-acyltaurides en C₈ à C₁₈, les N-sarcosinates en C₈ à ₁₈, les iséthionates d'alkyle en C₈ à C₁₈ ainsi que leurs mélanges.

5. Procédé selon l'une quelconque ou plusieurs des revendications 1 à 4,
**caractérisé en ce que**
le bain de lavage collecté dans un collecteur séparé contient de 0,01 à 5 % en poids de tensioactifs anioniques par rapport au bain de lavage total.

6. Procédé selon l'une quelconque ou plusieurs des revendications 1 à 5,
**caractérisé en ce que**
la fraction de tensioactifs anioniques représente, dans le bain de lavage, plus de 95 % en poids par rapport à la teneur totale en tensioactifs.

7. Procédé selon l'une quelconque ou plusieurs des revendications 1 à 6,
**caractérisé en ce que**
le sel de calcium hydrosoluble ajouté au bain de lavage collecté dans le collecteur séparé est choisi parmi le chlorure de calcium, l'acétate de calcium et le nitrate de calcium.

8. Procédé selon l'une quelconque ou plusieurs des revendications 1 à 7,
**caractérisé en ce qu'**
on ajoute au bain de lavage collecté dans un collecteur séparé une quantité de sel de calcium hydrosoluble égale à 0,5 à 2 fois la quantité de tensioactif anionique contenu équivalente en valeur.

9. Procédé selon l'une quelconque ou plusieurs des revendications 1 à 8,
**caractérisé en ce qu'**
on agite le bain de lavage collecté dans le collecteur séparé.

10. Procédé selon l'une quelconque ou plusieurs des revendications 1 à 9,
**caractérisé en ce que**
la température du bain de lavage collecté dans le collecteur séparé est comprise entre 20 et 80 °C.

11. Procédé selon l'une quelconque ou plusieurs des revendications 1 à 10,
**caractérisé en ce que**
la matière plastique hydrophobe chargée en huile est éliminée par incinération à l'issue du procédé.

12. Procédé selon l'une quelconque ou plusieurs des revendications 1 à 10,
**caractérisé en ce que**
la matière plastique hydrophobe chargée en huile est préparée, à l'issue du procédé par élimination de l'huile, pour être réutilisée.

13. Système pour le lavage de produits à laver pollués avec de l'huile, contenant :
a) un ou plusieurs agents tensioactifs dans lesquels la fraction de tensioactifs anioniques est supérieure à 95 % en poids par rapport à la teneur totale en tensioactifs,
b) un agent à base de sels de calcium hydrosolubles de préférence choisis parmi le chlorure de calcium, l'acétate de calcium et le nitrate de calcium, ainsi que
c) une matière plastique hydrophobe, de préférence choisie parmi la polyoléfine, le polysiloxane et le polypropylène d'une grande surface, lequel présente un pouvoir d'absorption de l'huile important et qui est utilisé, de préférence sous forme de tissu, de tissu à mailles ou de non-tissé.
